# EUROPÄISCHE PATENTSCHRIFT

(11) **EP 2 409 813 B1**
(45) Veröffentlichungstag und Bekanntmachung des Hinweises auf die Patenterteilung: **06.01.2016**
(21) Anmeldenummer: 11170868.1
(22) Anmeldetag: 22.06.2011
(51) Int. Cl.: B24D 18/00, B22F 3/00, B22F 7/06

(54) **Vorrichtung zum Positionieren von Schneidpartikeln**
Device for positioning cutting particles
Dispositif de positionnement de particules de coupe

(30) Priorität: 23.07.2010 DE 102010038324
(43) Veröffentlichungstag der Anmeldung: 25.01.2012
(73) Patentinhaber: HILTI Aktiengesellschaft, 9494 Schaan (LI)
(72) Erfinder: Flock, Markus, 8862 Schübelbach (CH)
(74) Vertreter: Hilti Aktiengesellschaft Corporate Intellectual Property

(56) Entgegenhaltungen:
- EP-A1- 0 452 618
- WO-A1-2008/143464
- WO-A1-2010/031089
- JP-A- H04 336 967

## Beschreibung

Die vorliegende Erfindung betrifft eine Vorrichtung zum Positionieren von Schneidpartikeln gemäß dem Oberbegriff des Anspruchs 1.

Bekannte Werkzeuge zur Bearbeitung von armiertem und nicht-armiertem Beton, wie Bohrkronen oder Kreissägeblätter, bestehen aus einem Hauptkörper, der mit segmentförmig ausgebildeten Schleifkörpern verbunden ist. Die Schleifkörper werden schichtweise aus mehreren übereinander liegenden Schichten aufgebaut und bestehen aus einem Grundmaterial, in das Schneidpartikel eingebettet sind. Das Grundmaterial ist pulverförmig oder in Form von dünnen, vorgefertigten Plättchen ausgebildet. Die Schneidpartikel sind als Diamantpartikel oder sonstige abrasive Partikel, die sich zur abtragenden Bearbeitung eignen, ausgebildet. Bekannt ist, die Schneid partikel regelmäßig im Schleifkörper anzuordnen, um die Schneidleistung und die Lebensdauer der Schleifkörper zu erhöhen. Werden die Schneidpartikel in das pulverförmige Grundmaterial gemischt, bilden sich Schneidpartikelnester, die sich negativ auf die Schneidleistung und die Lebensdauer der Schleifkörper auswirken.

EP 0 452 618 A1 offenbart eine Vorrichtung zur Herstellung von Schleifkörpern für Werkzeuge zur abtragenden Bearbeitung. Die Schleifkörper bestehen aus mehreren Schichten eines sinterfähigen Grundmaterials und mehreren Schichten der Schneidpartikel, wobei die Schichten abwechselnd in eine dem Schleifkörper entsprechende Negativ-Form eingebracht werden. Die schichtweise aufgebauten Schleifkörper werden gepresst, verdichtet und bei entsprechend hoher Temperatur und hohem Druck gesintert. Die Vorrichtung zur Herstellung der Schleifkörper umfasst eine erste Teilvorrichtung zum Aufbringen des Grundmaterials, eine zweite Teilvorrichtung zur Positionierung der Schneidpartikel im bzw. auf dem Grundmaterial und eine Kammer, in der der Aufbau des Schleifkörpers erfolgt. Die Schneidpartikel sind in einem Vorratsbehälter gelagert und werden mit Hilfe der zweiten Teilvorrichtung aus dem Vorratsbehälter entnommen und auf bzw. in dem Grundmaterial positioniert.

Die zweite Teilvorrichtung zur Positionierung der Schneidpartikel umfasst eine Aufnahmeeinrichtung, die mit einer Einrichtung zur Erzeugung einer Haltekraft verbunden ist. Die Aufnahmeeinrichtung ist als Saugplatte ausgebildet und weist mehrere Aufnahmeöffnungen, die die Schneidpartikel aufnehmen, auf. Die Haltekräfte, mit denen die Schneidpartikel in den Aufnahmeöffnungen fixiert werden, werden über eine Druckkammer, die über eine Verbindungsleitung mit einer Unterdruckeinrichtung verbunden ist, gleichzeitig in allen Aufnahmeöffnungen erzeugt. Die Anordnung der Aufnahmeöffnungen in der Saugplatte entspricht der gewünschten Anordnung der Schneidpartikel auf bzw. in dem Grundmaterial. Die Saugplatte ist austauschbar ausgebildet.

Die bekannte Vorrichtung zur Positionierung der Schneidpartikel umfasst mehrere Saugplatten, die sich in der Formation der Aufnahmeöffnungen unterscheiden. Nachteilig ist, dass die Saugplatte vom Bediener ausgetauscht werden muss, wenn die Schneidpartikel in übereinander liegenden Schichten des Schleifkörpers unterschiedlich angeordnet werden sollen.

Wünschenswert wäre es, bei einem Schleifkörper in übereinander liegenden Schichten unterschiedliche Anordnungen der Schneidpartikel einstellen zu können, ohne dass der Bediener die Saugplatte austauschen muss. Die Aufgabe der vorliegenden Erfindung besteht darin, eine Vorrichtung zur Positionierung von Schneidpartikeln dahingehend weiterzuentwickeln, dass mindestens zwei verschiedene Anordnungen der Schneidpartikel ohne Wechsel der Aufnahmeeinrichtung automatisch erzeugbar sind.

Diese Aufgabe wird bei der eingangs genannten Vorrichtung zur Positionierung von Schneidpartikeln erfindungsgemäß durch die Merkmale des unabhängigen Anspruchs 1 gelöst.

Erfindungsgemäß ist vorgesehen, dass die Haltekraft, die das erste Schneidpartikel in der ersten Aufnahmeöffnung fixiert, unabhängig von der Haltekraft, die das zweite Schneidpartikel in der zweiten Aufnahmeöffnung fixiert, einstellbar ist. Eine Aufnahmeeinrichtung, bei der die Haltekräfte der einzelnen Aufnahmeöffnungen unabhängig voneinander einstellbar sind, besitzt den Vorteil, dass verschiedene geometrische Anordnungen der Schneidpartikel erzeugt werden können, ohne dass die Aufnahmeeinrichtung ausgetauscht werden muss.

Bevorzugt weist die Aufnahmeeinrichtung eine weitere Aufnahmeöffnung zur Aufnahme eines weiteren Schneidpartikels auf, wobei die Einrichtung eine Haltekraft erzeugt, die das weitere Schneidpartikel in der weiteren Aufnahmeöffnung fixiert. Je mehr Aufnahmeöffnungen der Aufnahmeeinrichtung unabhängig voneinander ansteuerbar sind, umso mehr verschiedene geometrische Anordnungen der Schneidpartikel können erzeugt werden

In einer ersten bevorzugten Variante ist die Haltekraft, die das weitere Schneidpartikel in der weiteren Aufnahmeöffnung fixiert, unabhängig von der Haltekraft der ersten Aufnahmeöffnung und unabhängig von der Haltekraft der zweiten Aufnahmeöffnung einstellbar. Eine Ausführung der Aufnahmeeinrichtung, in der jede Aufnahmeöffnung über eine Steuereinrichtung einzeln ansteuerbar ist, hat den Vorteil, dass beliebige geometrische Anordnungen ohne Wechsel der Aufnahmeeinrichtung einstellbar sind.

In einer zweiten bevorzugten Variante ist die Haltekraft, die das weitere Schneidpartikel in der weiteren Aufnahmeöffnung fixiert, gemeinsam mit der Haltekraft der ersten Aufnahmeöffnung oder gemeinsam mit der Haltekraft der zweiten Aufnahmeöffnung einstellbar. In der Praxis reicht es häufig, dass bestimmte geometrische Anordnungen der Schneidpartikel einstellbar sind. Wenn eine individuelle Ansteuerung jeder einzelnen Aufnahmeöffnung nicht notwendig ist, kann der technische Aufwand begrenzt werden.

In einer weiteren bevorzugten Ausführung weist die Aufnahmeeinrichtung eine erste Gruppe von Aufnahmeöffnungen und eine zweite Gruppe von Aufnahmeöffnungen auf, wobei die Haltekraft der zweiten Gruppe von Aufnahmeöffnungen unabhängig von der Haltekraft der ersten Gruppe von Aufnahmeöffnungen einstellbar ist.

Bevorzugt sind eine erste Verbindungsleitung, die die erste Aufnahmeöffnung oder die erste Gruppe von Aufnahmeöffnungen mit der Unterdruckeinrichtung verbindet, und eine zweite Verbindungsleitung, die die zweite Aufnahmeöffnung oder die zweite Gruppe von Aufnahmeöffnungen mit der Unterdruckeinrichtung verbindet, vorgesehen.

Die Haltekraft der ersten Aufnahmeöffnung oder der ersten Gruppe von Aufnahmeöffnungen sind besonders bevorzugt über eine erste Ventileinrichtung und die Haltekraft der zweiten Aufnahmeöffnung oder der zweiten Gruppe von Aufnahmeöffnungen über eine zweite Ventileinrichtung unabhängig voneinander einstellbar. Dabei sind die Ventileinrichtungen in einer ersten Variante zwischen einer geschlossenen Stellung und einer offenen Stellung schaltbar ausgebildet. In einer zweiten Variante kann der Durchfluss in mehreren diskreten Stufen oder kontinuierlich eingestellt werden. Dazu sind die Ventileinrichtungen mit einer Steuereinrichtung verbunden, die in die Unterdruckeinrichtung integriert oder als separate Steuereinrichtung ausgebildet ist.

Bevorzugt weist die Aufnahmeeinrichtung eine Aufnahmeplatte, die die Aufnahmeöffnungen umfasst, und eine Anschlussplatte auf, wobei die Anschlussplatte mittels einer Feststelleinrichtung druckdicht mit der Aufnahmeplatte verbindbar ist. Durch die Ausbildung einer zweiteiligen Aufnahmeeinrichtung mit einer Aufnahmeplatte und einer Anschlussplatte können mehrere Aufnahmeöffnungen zusammengefasst und gemeinsam angesteuert werden.

Dabei sind ein erstes Verbindungskanalsystem, das die ersten Aufnahmeöffnungen mit einem ersten Anschlusselement verbindet, und ein zweites Verbindungskanalsystem, das die zweiten Aufnahmeöffnungen mit einem zweiten Anschlusselement verbindet, besonders bevorzugt in einer ersten Variante in der Anschlussplatte und in einer zweiten Variante in der Aufnahmeplatte vorgesehen. Der zweiteilige Aufbau der Aufnahmeeinrichtung aus einer Aufnahmeplatte und einer Anschlussplatte hat den Vorteil, dass die Verbindungskanalsysteme in die Oberseite der Aufnahmeplatte oder in die Unterseite der Anschlussplatte gefräst werden können und der druckdichte Abschluss der Aufnahmeeinrichtung über die zweite Platte und eine Feststelleinrichtung hergestellt wird. Dieser Aufbau reduziert den technischen Aufwand bei der Herstellung der Verbindungskanäle.

Sind die Verbindungskanalsysteme in der Anschlussplatte vorgesehen, können durch Austausch der Anschlussplatte weitere geometrische Anordnungen der Schneidpartikel eingestellt werden. In der Aufnahmeplatte ist eine Vielzahl von Aufnahmeöffnungen, die als Durchgangsbohrungen ausgebildet sind, regelmäßig angeordnet. Durch den Verlauf der Verbindungskanalsysteme in der Anschlussplatte können verschiedene Aufnahmeöffnungen zu einer Gruppe zusammengefasst werden.

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung.

Es zeigen:
- Fig. 1: eine erfindungsgemäße Vorrichtung zum Positionieren von Schneidpartikeln in einem Grundmaterial mit einer einteilig ausgebildeten Aufnahmeeinrichtung, die die Schneidpartikel mit Hilfe einer Unterdruckeinrichtung in den Aufnahmeöffnungen fixiert;
- Fign. 2a, b: eine zweiteilige Aufnahmeeinrichtung bestehend aus einer Aufnahmeplatte mit mehreren Aufnahmeöffnungen und einer Anschlussplatte in einer Ansicht von unten auf die Anschlussplatte (Fig. 2a) und in einem Schnitt entlang der Linie A-A;
- Fign. 3a-c: drei verschiedene geometrische Anordnungen von Schneidpartikeln, die mit der Aufnahmeeinrichtung der Fig. 2 einstellbar sind; und
- Fig. 4: ein Verfahren zum Positionieren von Schneidpartikeln in einem Grundmaterial mit Hilfe der zweiteiligen Aufnahmeeinrichtung der Fig. 2.

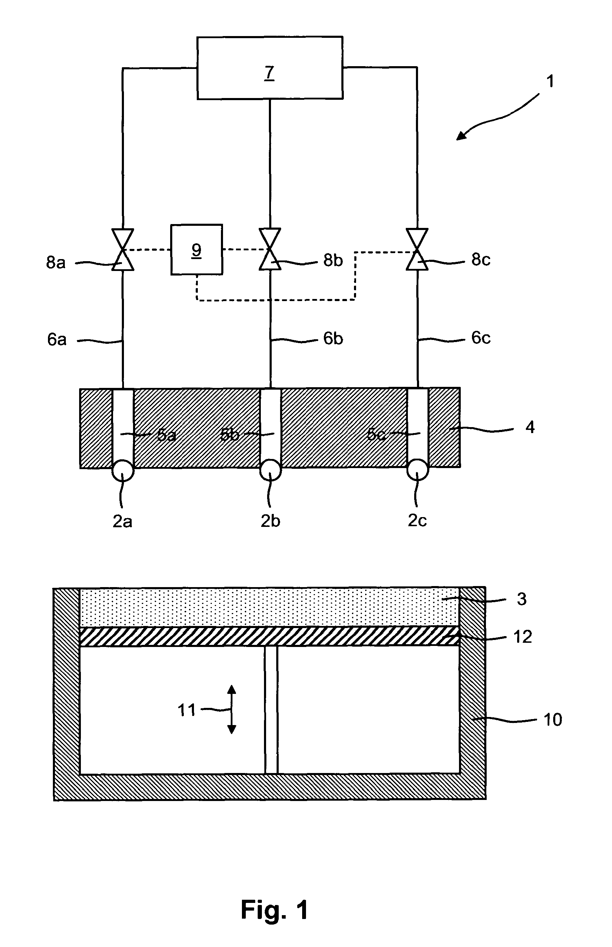

**Fig. 1** zeigt eine erfindungsgemäße Vorrichtung **1** zum Positionieren von Schneidpartikeln **2** in einem Grundmaterial **3** in einer schematischen Darstellung.

Die Vorrichtung 1 umfasst eine als Saugplatte ausgebildete Aufnahmeeinrichtung **4** mit drei Aufnahmeöffnungen **5a-c,** die als erste Aufnahmeöffnung 5a, zweite Aufnahmeöffnung 5b und dritte Aufnahmeöffnung 5c bezeichnet werden. Die Aufnahmeöffnungen 5a-c sind über Verbindungsleitungen **6a-c** mit einer Einrichtung zur Erzeugung einer Haltekraft, die in Form einer Unterdruckeinrichtung **7** ausgebildet ist, verbunden. Die Verbindungsleitungen 6a-c weisen Ventileinrichtungen **8a-c** auf, die über eine Steuereinrichtung **9** zwischen einem offenen Zustand und einem geschlossenen Zustand schaltbar sind. Der Unterdruck bzw. die Saugkraft in den drei Aufnahmeöffnungen 5a-c ist unabhängig voneinander einstellbar. Alternativ können die Ventileinrichtungen 8b, 8c der zweiten und dritten Aufnahmeöffnung 5b, 5c gekoppelt werden. In diesem Fall ist der Unterdruck bzw. die Saugkraft in der ersten Aufnahmeöffnung 5a unabhängig vom Unterdruck bzw. der Saugkraft der zweiten und dritten Aufnahmeöffnung 5b, 5c einstellbar. Die Saugkraft wird in der zweiten und dritten Aufnahmeöffnung 5b, 5c gemeinsam eingeschaltet, so dass in beiden Aufnahmeöffnungen 5b, 5c Schneidpartikel gehalten werden.

Die Aufnahmeeinrichtung der Fig. 1 besteht aus einer einteiligen Saugplatte mit Aufnahmeöffnungen 5a-c, die als Durchgangsbohrungen ausgebildet und über Verbindungsleitungen 6a-c mit der Unterdruckeinrichtung 7 verbunden sind. Die Durchgangsbohrungen dienen auf der einen Seite zur Aufnahme der Schneidpartikel und auf der anderen Seite zum Anschluss der Verbindungsleitungen 6a-c. Die Durchgangsbohrungen sind in dem Bereich, in dem die Schneidpartikel mit Unterdruck gehalten werden, von der Form und Größe an die Schneidpartikel angepasst. Die Aufnahmeöffnungen 5a-c sind so gestaltet, dass die Schneidpartikel nicht durch die Aufnahmeöffnungen 5a-c in die Verbindungsleitungen 6a-c gesaugt werden und die Schneidpartikel durch den Unterdruck sicher in den Aufnahmeöffnungen 5a-c gehalten werden.

Die erfindungsgemäße Vorrichtung 1 zum Positionieren von Schneidpartikeln 2a-c ist Teil einer Vorrichtung zur Herstellung von Schleifkörpern für Bohrkronen, Sägeblätter und sonstigen Werkzeuge zur abtragenden Bearbeitung. Die Schleifkörper werden schichtweise aus mehreren übereinander liegenden Schichten aufgebaut und bestehen aus dem pulverförmigen Grundmaterial 3, in das die Schneidpartikel 2a-c eingebettet sind. Die Schneidpartikel sind als Diamantpartikel oder sonstige abrasive Partikel, die sich zur abtragenden Bearbeitung eignen, ausgebildet. Das pulverförmige Grundmaterial 3 wird in einer Kammer **10,** die dem aufzubauenden Schleifkörper entspricht, aufgebaut. Die Kammer 10 weist eine in einer Richtung **11** verstellbare Plattform **12** auf.

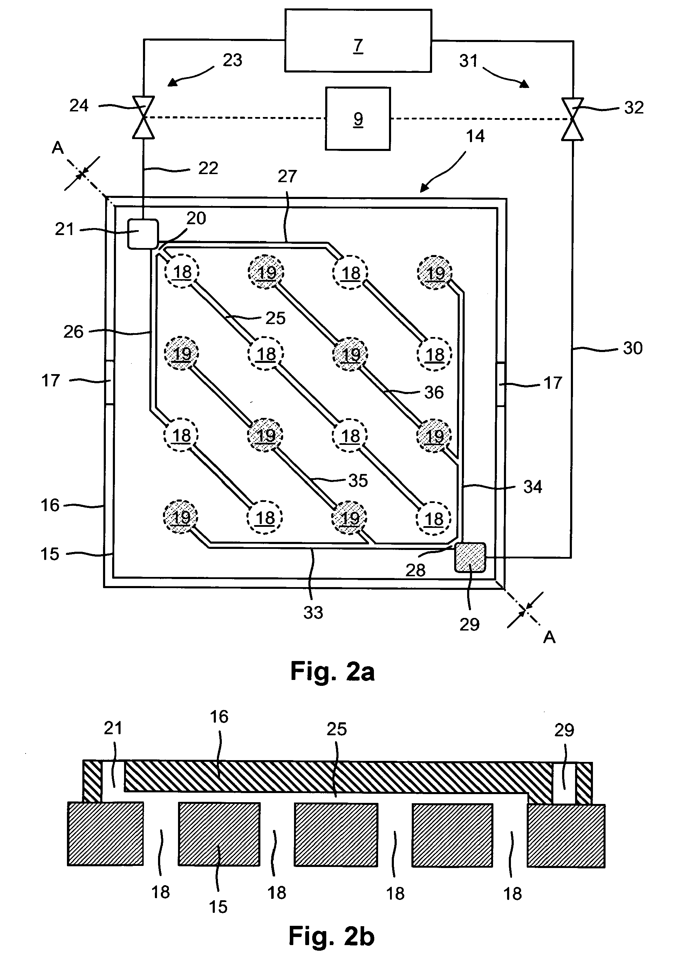

**Fign. 2a**, **b** zeigen eine zweiteilige Aufnahmeeinrichtung **14** in einer schematischen Darstellung (Fig. 2a) und einem Schnitt entlang der Linie A-A (Fig. 2b). Die Aufnahmeeinrichtung 14 besteht aus einer ersten Platte **15** und einer zweiten Platte **16.** Die erste Platte 15 weist mehrere Aufnahmeöffnungen zur Aufnahme von Schneidpartikeln auf und wird als Aufnahmeplatte bezeichnet. Die zweite Platte 16 dient zur Verbindung der Aufnahmeeinrichtung 14 mit der Unterdruckeinrichtung 7 und wird als Anschlussplatte bezeichnet. Die Anschlussplatte 16 ist mittels einer Feststelleinrichtung **17** druckdicht mit der Aufnahmeplatte 15 verbindbar. Die zweiteilige Aufnahmeeinrichtung 14 kann die Aufnahmeeinrichtung 4 der erfindungsgemässen Vorrichtung 1 zur Positionierung von Schneidpartikeln ersetzen.

Die Aufnahmeplatte 15 umfasst 16 gestrichelt dargestellte Aufnahmeöffnungen, die identisch ausgebildet und in vier Reihen und vier Spalten angeordnet sind. Die Aufnahmeöffnungen der Aufnahmeplatte 15 sind in eine erste Gruppe von Aufnahmeöffnungen, die als erste Aufnahmeöffnungen **18** bezeichnet werden, und eine zweite Gruppe von Aufnahmeöffnungen, die als zweite Aufnahmeöffnungen **19** bezeichnet werden, unterteilt. Die ersten und zweiten Aufnahmeöffnungen 18, 19 sind jeweils in einer Reihe und einer Spalte benachbart zueinander angeordnet, so dass sich ein regelmäßiges Muster der ersten und zweiten Aufnahmeöffnungen 18, 19 ergibt. Alternativ können die ersten und zweiten Aufnahmeöffnungen unterschiedliche Geometrien aufweisen, so dass die ersten und zweiten Aufnahmeöffnungen unterschiedlich große Schneidpartikel aufnehmen können.

Die ersten Aufnahmeöffnungen 18 sind über ein erstes Verbindungskanalsystem **20,** ein erstes Anschlusselement **21** und eine erste Anschlussleitung **22** mit der Unterdruckeinrichtung 7 verbunden. Das Verbindungskanalsystem 20, das Anschlusselement 21 und die Anschlussleitung bilden zusammen eine erste Verbindungsleitung **23** zwischen den ersten Aufnahmeöffnungen 18 und der Unterdruckeinrichtung 7.

In der Ausführung der Fign. 2a, b sind die ersten und zweiten Aufnahmeöffnungen 18, 19 der Aufnahmeplatte 15 als Durchgangsbohrungen ausgebildet und die Anschlussplatte 16 weist auf der der Aufnahmeplatte 15 zugewandten Seite das erste Verbindungskanalsystem 20 auf, das in die Anschlussplatte 16 gefräst ist. Alternativ ist das erste Verbindungskanalsystem in der Aufnahmeplatte 15 angeordnet und die Aufnahmeöffnungen sind als Sacklochbohrungen in der Aufnahmeplatte 15 ausgebildet. Die Anschlussplatte dichtet das erste Verbindungskanalsystem druckdicht ab.

In der ersten Verbindungsleitung 23 ist eine erste Ventileinrichtung **24** vorgesehen, über die die Verbindungsleitung 23 zwischen einer offenen Stellung und einer geschlossenen Stellung und somit die Haltekraft der ersten Aufnahmeöffnungen 18 schaltbar ist. Außerdem kann die Stärke der Haltekraft in den ersten Aufnahmeöffnungen 18 über die erste Ventileinrichtung 24 gesteuert werden. Die erste Ventileinrichtung 24 ist in der ersten Anschlussleitung 22 angeordnet. Alternativ kann die erste Ventileinrichtung 24 in die Unterdruckeinrichtung 7 oder in das erste Anschlusselement 21 integriert sein.

Das erste Verbindungskanalsystem 20 verbindet die ersten Aufnahmeöffnungen 18 mit dem ersten Anschlusselement 21. Dabei können mehrere oder alle ersten Aufnahmeöffnungen 18 über einen gemeinsamen Verbindungskanal mit dem ersten Anschlusselement 21 verbunden sein. In der Ausführung der Fig. 2a weist das erste Verbindungskanalsystem 20 drei Verbindungskanäle **25, 26, 27** auf, die die ersten Aufnahmeöffnungen 18 mit dem ersten Anschlusselement 21 verbinden.

Die zweiten Aufnahmeöffnungen 19 sind über ein zweites Verbindungskanalsystem **28,** ein zweites Anschlusselement **29** und eine zweite Anschlussleitung **30,** die zusammen eine zweite Verbindungsleitung **31** bilden, mit der Unterdruckeinrichtung 7 verbunden. In der zweiten Verbindungsleitung 31 ist eine zweite Ventileinrichtung **32** vorgesehen. Das zweite Verbindungskanalsystem 28 umfasst vier Verbindungskanäle **33-36,** wobei die Verbindungskanäle 33, 34 direkt mit dem zweiten Anschlusselement 29 verbunden sind und die Verbindungskanäle 35, 36 in die Verbindungskanäle 33, 34 münden. Alternativ können die Verbindungskanäle 35, 36 direkt in das zweite Anschlusselement 29 münden.

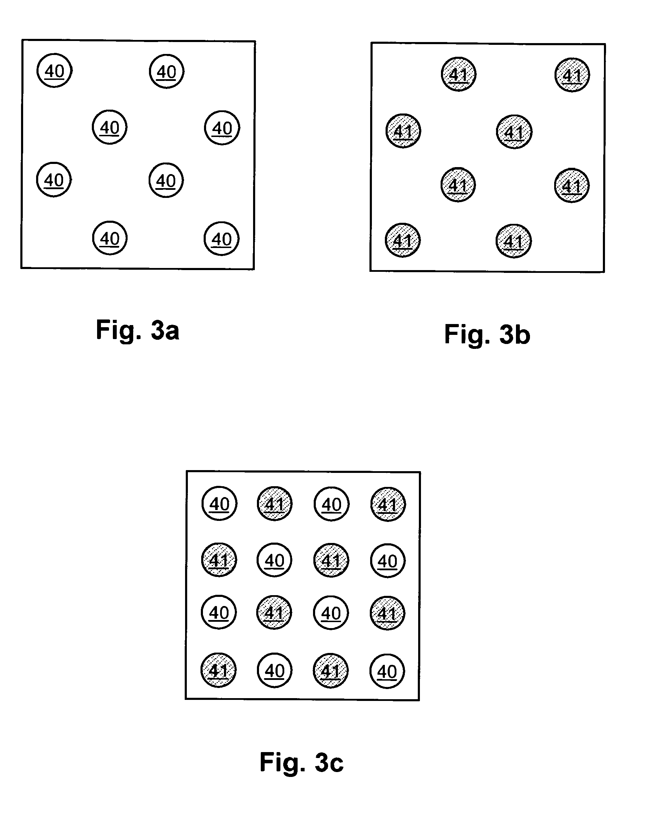

Die in Fign. 2a, b gezeigte Ausführung der zweiteiligen Aufnahmeeinrichtung 14 mit der Aufnahmeplatte 15 und der Anschlussplatte 16 ermöglicht drei verschiedene geometrische Anordnungen der Schneidpartikel in einer Schicht, ohne dass ein Wechsel der Aufnahmeeinrichtung 14 erforderlich ist. Die **Fign. 3a****-c** zeigen die drei verschiedenen geometrischen Anordnungen der Schneidpartikel in einer Schicht, die die Aufnahmeeinrichtung 14 der Fign. 2a, b erzeugen kann.

Fig. 3a zeigt die geometrische Anordnung von acht Schneidpartikeln **40,** die in den ersten Aufnahmeöffnungen 18 der Aufnahmeeinrichtung 14 fixiert wurden. Um in den ersten Aufnahmeöffnungen 18 Haltekräfte zu erzeugen, wird die erste Verbindungsleitung 23 über die erste Ventileinrichtung 24 geöffnet und die zweite Verbindungsleitung 31 über die zweite Ventileinrichtung 32 geschlossen. Die Unterdruckeinrichtung 7 erzeugt in den ersten Aufnahmeöffnungen 18 Haltekräfte, durch die die Schneidpartikel 40 fixiert werden.

Fig. 3b zeigt die geometrische Anordnung von acht Schneidpartikeln **41,** die in den zweiten Aufnahmeöffnungen 19 der Aufnahmeeinrichtung 14 fixiert wurden. Um in den zweiten Aufnahmeöffnungen 19 Haltekräfte zu erzeugen, wurde die erste Verbindungsleitung 23 über die erste Ventileinrichtung 24 geschlossen und die zweite Verbindungsleitung 31 über die zweite Ventileinrichtung 32 geöffnet. Die Unterdruckeinrichtung 7 erzeugt in den zweiten Aufnahmeöffnungen 19 Haltekräfte, durch die die Schneidpartikel 41 fixiert werden.

Fig. 3c zeigt die geometrische Anordnung von 16 Schneidpartikeln 40, 41, die in den ersten und zweiten Aufnahmeöffnungen 18, 19 der Aufnahmeeinrichtung 14 fixiert wurden. Um in den ersten und zweiten Aufnahmeöffnungen 18, 19 Haltekräfte zu erzeugen, wurde die erste Verbindungsleitung 23 über die erste Ventileinrichtung 24 geöffnet und die zweite Verbindungsleitung 31 über die zweite Ventileinrichtung 32 geöffnet.

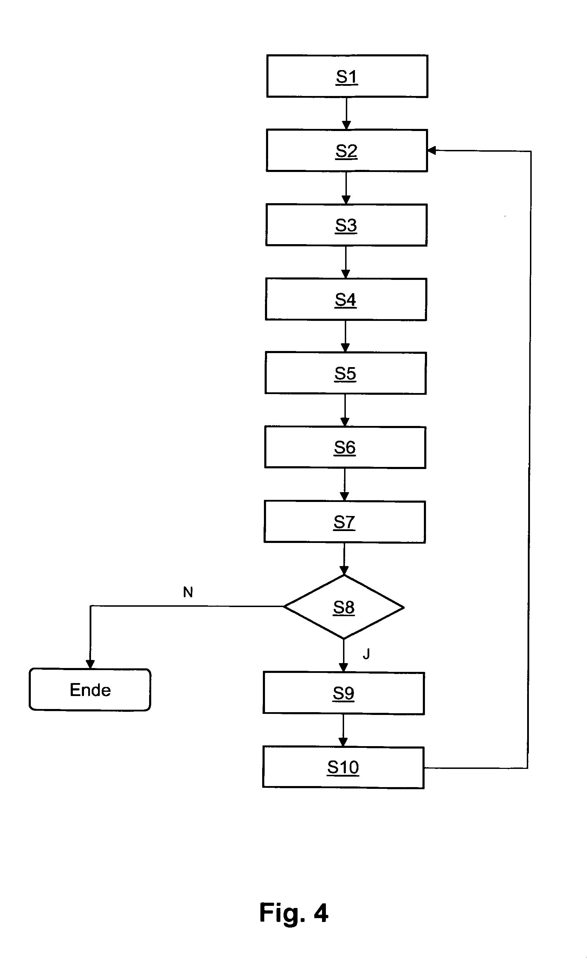

**Fig. 4** zeigt ein Verfahren zum Positionieren von Schneidpartikeln in einem Grundmaterial 3 mit Hilfe der zweiteiligen Aufnahmeeinrichtung 14 der Fign. 2a, b. Das Verfahren zum Positionieren von Schneidpartikeln ist Teil eines Verfahrens zur Herstellung von Schleifkörpern für Bohrkronen, Sägeblätter und sonstigen Werkzeuge zur abtragenden Bearbeitung. Die Schleifkörper werden schichtweise aus mehreren übereinander liegenden Schichten aufgebaut und bestehen aus dem pulverförmigen Grundmaterial 3, in das die Schneidpartikel eingebettet sind.

In einem Schritt **S1** wählt der Bediener die Aufnahmeöffnungen 18, 19 der Aufnahmeeinrichtung 14 aus, die Schneidpartikel aufnehmen sollen. Dabei kann der Bediener die Aufnahmeöffnungen einzeln oder aus einer Liste eine voreingestellte Formation von Aufnahmeöffnungen auswählen. Wenn mehrere Schichten übereinander hergestellt werden, legt der Bediener für jede Schicht fest, welche Aufnahmeöffnungen 18, 19 Schneidpartikel fixieren sollen. Dabei werden die Schneidpartikel in direkt übereinander liegenden Schichten unterschiedlich positioniert, beispielsweise wie in Fig. 3a und Fig. 3b gezeigt.

Nachdem die Vorbereitung durch den Bediener abgeschlossen ist, beginnt der schichtweise Aufbau des Schleifkörpers. Die Aufnahmeeinrichtung 14 wird in einem Schritt **S2** in einen Vorratsbehälter, der mit Schneidpartikeln 40, 41 gefüllt ist, bewegt. Diese Position wird als Beladeposition der Aufnahmeeinrichtung 14 bezeichnet. In einem Schritt **S3** stellt die Steuereinrichtung 9 die Verbindungsleitungen zwischen der Unterdruckeinrichtung 7 und den für die Schicht ausgewählten Aufnahmeöffnungen 18, 19 durch Öffnen der entsprechenden Ventileinrichtungen 24, 32 her und in den ausgewählten Aufnahmeöffnungen entsteht Haltekräfte, durch die die Schneidpartikel in den Aufnahmeöffnungen fixiert werden.

In einer ersten Variante ist die Unterdruckeinrichtung 7 während des gesamten Verfahrens aktiv und die Haltekraft in den ausgewählten Aufnahmeöffnungen entsteht beim Öffnen der Ventileinrichtungen. Die erste Variante eignet sich bei kurzen Wartezeiten zwischen dem Aufbau übereinander liegender Schichten und bei langen Einschaltzeiten der Unterdruckeinrichtung 7. In einer zweiten Variante wird die Unterdruckeinrichtung 7 von der Steuereinrichtung ein- und ausgeschaltet. Die zweite Variante eignet sich bei langen Wartezeiten zwischen dem Aufbau übereinander liegender Schichten und bei kurzen Einschaltzeiten der Unterdruckeinrichtung 7.

In einem Schritt **S4** wird die Aufnahmeeinrichtung 14 aus der Beladeposition in eine Entladeposition bewegt. In der Entladeposition ist die Aufnahmeeinrichtung 14 oberhalb der Kammer 10 angeordnet. Die Unterdruckeinrichtung 7 reduziert den Unterdruck in einem Schritt **S5** soweit, dass sich die Schneidpartikel aus den Aufnahmeöffnungen lösen und auf bzw. in das Grundmaterial 3 fallen. Das Lösen der Schneidpartikel aus den Aufnahmeöffnungen kann durch einen Druckluftstoß verstärkt werden. Dabei darf der Druckluftstoß nur so groß sein, dass die geometrische Anordnung der Schneidpartikel auf bzw. in dem Grundmaterial 3 erhalten bleibt.

In einem Schritt **S6** wird die Aufnahmeeinrichtung 14 aus der Entladeposition in die Beladeposition oder falls keine weiteren Schneidpartikel positioniert werden sollen, in eine Ausgangsposition bewegt. Das Grundmaterial 3 und die Schneidpartikel werden in einem Schritt **S7** beispielsweise mit Hilfe eines Stempels verdichtet.

In einem Schritt **S8** wird geprüft, ob eine weitere Schicht aufgebaut werden soll. Soll eine weitere Schicht aufgebaut werden (J in S8), wird die verstellbare Plattform 12 in einem Schritt **S9** um die gewünschte Schichtdicke in der Richtung 11 nach unten verfahren und in einem Schritt **S10** wird eine weitere Schicht Grundmaterial 3 aufgebracht und geglättet. Das Verfahren wird mit Schritt S2 fortgesetzt. Wenn keine weitere Schicht aufgebaut werden soll (N in S8), ist das Verfahren beendet.

## Patentansprüche

1. Vorrichtung (1) zum Positionieren von Schneidpartikeln (2a-c; 40, 41) bestehend aus einer Aufnahmeeinrichtung (4; 14), die eine erste Aufnahmeöffnung (5a; 18) zur Aufnahme eines ersten Schneidpartikels (2a; 40) und eine zweite Aufnahmeöffnung (5b; 19) zur Aufnahme eines zweiten Schneidpartikels (2b; 41) aufweist, und einer Einrichtung (7) zur Erzeugung einer Haltekraft, die die Schneidpartikel (2a, 2b; 40, 41) in den Aufnahmeöffnungen (5a, 18; 5b, 19) fixiert, wobei die Einrichtung zur Erzeugung einer Haltekraft eine Unterdruckeinrichtung (7), die in den Aufnahmeöffnungen (5a, 5b, 5c; 18, 19) eine Haltekraft erzeugt, umfasst,
**dadurch gekennzeichnet, dass** die Haltekraft, die das erste Schneidpartikel (2a; 40) in der ersten Aufnahmeöffnung (5a; 18) fixiert, unabhängig von der Haltekraft, die das zweite Schneidpartikel (2b; 41) in der zweiten Aufnahmeöffnung (5b; 19) fixiert, einstellbar ist.

2. Vorrichtung nach Anspruch 1, **dadurch gekennzeichnet, dass** die Aufnahmeeinrichtung (4; 14) eine weitere Aufnahmeöffnung (5c) zur Aufnahme eines weiteren Schneidpartikels (2c) aufweist, wobei die Unterdruckeinrichtung (7) eine Haltekraft erzeugt, die das weitere Schneidpartikel (2c) in der weiteren Aufnahmeöffnung (5c) fixiert.

3. Vorrichtung nach Anspruch 2, **dadurch gekennzeichnet, dass** die Haltekraft, die das weitere Schneidpartikel (2c) in der weiteren Aufnahmeöffnung (5c) fixiert, unabhängig von der Haltekraft der ersten Aufnahmeöffnung (5a; 18) und unabhängig von der Haltekraft der zweiten Aufnahmeöffnung (5b; 19) einstellbar ist.

4. Vorrichtung nach Anspruch 2, **dadurch gekennzeichnet, dass** die Haltekraft, die das weitere Schneidpartikel (2c) in der weiteren Aufnahmeöffnung (5c) fixiert, gemeinsam mit der Haltekraft der ersten Aufnahmeöffnung (5a; 18) oder gemeinsam mit der Haltekraft der zweiten Aufnahmeöffnung (5b; 19) einstellbar ist.

5. Vorrichtung nach Anspruch 1, **dadurch gekennzeichnet, dass** die Aufnahmeeinrichtung (14) eine erste Gruppe von Aufnahmeöffnungen (18) und eine zweite Gruppe von Aufnahmeöffnungen (19) aufweist, wobei die Haltekraft der ersten Gruppe von Aufnahmeöffnungen (18) unabhängig von der Haltekraft der zweiten Gruppe von Aufnahmeöffnungen (19) einstellbar ist.

6. Vorrichtung nach Anspruch 5, **dadurch gekennzeichnet, dass** eine erste Verbindungsleitung (6a; 23), die die erste Aufnahmeöffnung (5a) oder die erste Gruppe von Aufnahmeöffnungen (18) mit der Unterdruckeinrichtung (7) verbindet, und eine zweite Verbindungsleitung (6b; 31), die die zweite Aufnahmeöffnung (5b) oder die zweite Gruppe von Aufnahmeöffnungen (19) mit der Unterdruckeinrichtung (7) verbindet, vorgesehen sind.

7. Vorrichtung nach Anspruch 6, **dadurch gekennzeichnet, dass** die Haltekraft der ersten Aufnahmeöffnung (5a) oder der ersten Gruppe von Aufnahmeöffnungen (18) über eine erste Ventileinrichtung (8a; 24) und die Haltekraft der zweiten Aufnahmeöffnung (5b) oder der zweiten Gruppe von Aufnahmeöffnungen (19) über eine zweite Ventileinrichtung (8b; 32) unabhängig voneinander einstellbar sind.

8. Vorrichtung nach einem der Ansprüche 1 bis 7, **dadurch gekennzeichnet, dass** die Aufnahmeeinrichtung (14) eine Aufnahmeplatte (15), die die Aufnahmeöffnungen umfasst, und eine Anschlussplatte (16) aufweist, wobei die Anschlussplatte (16) mittels einer Feststelleinrichtung (17) druckdicht mit der Aufnahmeplatte (15) verbindbar ist.

9. Vorrichtung nach Anspruch 8, **dadurch gekennzeichnet, dass** in der Anschlussplatte (16) ein erstes Verbindungskanalsystem (20), das die ersten Aufnahmeöffnungen (18) mit einem ersten Anschlusselement (21) verbindet, und ein zweites Verbindungskanalsystem (28), das die zweiten Aufnahmeöffnungen (19) mit einem zweiten Anschlusselement (29) verbindet, vorgesehen ist.

10. Vorrichtung nach Anspruch 8, **dadurch gekennzeichnet, dass** in der Aufnahmeplatte (16) ein erstes Verbindungskanalsystem, das die ersten Aufnahmeöffnungen (18) mit einem ersten Anschlusselement (21) verbindet, und ein zweites Verbindungskanalsystem, das die zweiten Aufnahmeöffnungen (19) mit einem zweiten Anschlusselement (29) verbindet, vorgesehen ist.

## Claims

1. Apparatus (1) for positioning cutting particles (2a-c; 40, 41) comprising a pick-up means (4; 14) which has a first pick-up opening (5a; 18) to pick up a first cutting particle (2a; 40) and a second pick-up opening (5b; 19) to pick up a second cutting particle (2b; 41), and a means (7) for generating a retaining force which holds the cutting particles (2a, 2b; 40, 41) fixed in the pick-up openings (5a, 18; 5b, 19), the means for generating a retaining force comprising a vacuum means (7) which generates a retaining force in the pick-up openings (5a, 5b, 5c; 18, 19), **characterised in that** the retaining force which holds the first cutting particle (2a; 40) fixed in the first pick-up opening (5a; 18) can be set independently of the retaining force which holds the second cutting particle (2b; 41) fixed in the second pick-up opening (5b; 19).

2. Apparatus according to claim 1, **characterised in that** the pick-up means (4; 14) has a further pick-up opening (5c) to pick up a further cutting particle (2c), the vacuum means (7) generating a retaining force which holds the further cutting particle (2c) fixed in the further pick-up opening (5c).

3. Apparatus according to claim 2, **characterised in that** the retaining force which holds the further cutting particle (2c) fixed in the further pick-up opening (5c) can be set independently of the retaining force from the first pick-up opening (5a; 18) and independently of the retaining force from the second pick-up opening (5b; 19).

4. Apparatus according to claim 2, **characterised in that** the retaining force which holds the further cutting particle (2c) fixed in the further pick-up opening (5c) can be set in common with the retaining force from the first pick-up opening (5a; 18) or in common with the retaining force from the second pick-up opening (5b; 19).

5. Apparatus according to claim 1, **characterised in that** the pick-up means (14) has a first group of pick-up openings (18) and a second group of pick-up openings (19), the retaining force from the first group of pick-up openings (18) being able to be set independently of the retaining force from the second group of pick-up openings (19).

6. Apparatus according to claim 5, **characterised in that** there are provided a first connecting line (6a; 23) which connects the first pick-up opening (5a) or the first group of pick-up openings (18) to the vacuum means (7), and a second connecting line (6b; 31) which connects the second pick-up opening (5b) or the second group of pick-up openings (19) to the vacuum means (7).

7. Apparatus according to claim 6, **characterised in that** the retaining force from the first pick-up opening (5a) or the first group of pick-up openings (18), and the retaining force from the second pick-up opening (5b) or the second group of pick-up openings (19), can be set independently of one another, by means of a first valve means (8a; 24) and a second valve means (8b; 32) respectively.

8. Apparatus according to one of claims 1 to 7, **characterised in that** the pick-up means (14) has a pick-up plate (15) which comprises the pick-up openings and a connecting plate (16), a pressure-tight connection being able to be made from the connecting plate (16) to the pick-up plate (15) by means of a locking means (17).

9. Apparatus according to claim 8, **characterised in that** there are provided in the connecting plate (16) a first system (20) of connecting passages which connects the first pick-up openings (18) to a first connecting member (21), and a second system (28) of connecting passages which connects the second pick-up openings (19) to a second connecting member (29).

10. Apparatus according to claim 8, **characterised in that** there are provided in the pick-up plate (16) a first system of connecting passages which connects the first pick-up openings (18) to a first connecting member (21), and a second system of connecting passages which connects the second pick-up openings (19) to a second connecting member (29).

## Revendications

1. Dispositif (1) destiné à positionner des particules de coupe (2a à 2c ; 40, 41), constitué d'un dispositif de réception (4 ; 14) comportant une première ouverture de réception (5a ; 18) pour recevoir une première particule de coupe (2a ; 40) et une seconde ouverture de réception (5b ; 19) pour recevoir une seconde particule de coupe (2b ; 41), et un dispositif (7) pour générer une force de retenue qui fixe les particules de coupe (2a, 2b ; 40, 41) dans les ouvertures de réception (5a, 18 ; 5b, 19), dans lequel le dispositif pour générer une force de retenue comprend un dispositif de pression négative (7) qui génère une force de retenue dans les ouvertures de réception (5a, 5b, 5c ; 18, 19),
**caractérisé en ce que** la force de retenue qui fixe la première particule de coupe (2a ; 40) dans la première ouverture de réception (5a ; 18), peut être réglée indépendamment de la force de retenue qui fixe la seconde particule de coupe (2b ; 41) dans la seconde ouverture de réception (5b ; 19).

2. Dispositif selon la revendication 1, **caractérisé en ce que** le dispositif de réception (4 ; 14) comporte une ouverture de réception supplémentaire (5c) pour recevoir une particule de coupe supplémentaire (2c), dans lequel le dispositif de pression négative (7) génère une force de retenue qui fixe la particule de coupe supplémentaire (2c) dans l'ouverture de réception supplémentaire (5c).

3. Dispositif selon la revendication 2, **caractérisé en ce que** la force de retenue qui fixe la particule de coupe supplémentaire (2c) dans l'ouverture de réception supplémentaire (5c), peut être réglée indépendamment de la force de retenue de la première ouverture de réception (5a ; 18) et indépendamment de la force de retenue de la seconde ouverture de réception (5b ; 19).

4. Dispositif selon la revendication 2, **caractérisé en ce que** la force de retenue qui fixe la particule de coupe supplémentaire (2c) dans l'ouverture de réception supplémentaire (5c), peut être réglée conjointement avec la force de retenue de la première ouverture de réception (5a ; 18) ou conjointement avec la force de retenue de la seconde ouverture de réception (5b ; 19).

5. Dispositif selon la revendication 1, **caractérisé en ce que** le dispositif de réception (14) comporte un premier groupe d'ouvertures de réception (18) et un second groupe d'ouvertures de réception (19), dans lequel la force de retenue du premier groupe d'ouvertures de réception (18) peut être réglée indépendamment de la force de retenue du second groupe d'ouvertures de réception (19).

6. Dispositif selon la revendication 5, **caractérisé en ce qu'**une première conduite de liaison (6a ; 23) reliant la première ouverture de réception (5a) ou le premier groupe d'ouvertures de réception (18) au dispositif de pression négative (7), et une seconde conduite de liaison (6b ; 31) reliant la seconde ouverture de réception (5b) ou le second groupe d'ouvertures de réception (19) au dispositif de pression négative (7), sont prévues.

7. Dispositif selon la revendication 6, **caractérisé en ce que** la force de retenue de la première ouverture de réception (5a) ou du premier groupe d'ouvertures de réception (18) peut être réglée par l'intermédiaire d'un premier dispositif de soupape (8a ; 24) et la force de retenue de la seconde ouverture de réception (5b) ou du second groupe d'ouvertures de réception (19) peut être réglée par l'intermédiaire d'un second dispositif de soupape (8b ; 32), les forces de retenue étant réglées indépendamment l'une de l'autre.

8. Dispositif selon l'une des revendications 1 à 7, **caractérisé en ce que** le dispositif de réception (14) comporte une plaque de réception (15) qui comprend des ouvertures de réception et une plaque de raccordement (16), dans lequel la plaque de raccordement (16) peut être reliée à la plaque de réception (15) de manière étanche à la pression au moyen d'un dispositif de blocage (17).

9. Dispositif selon la revendication 8, **caractérisé en ce que** dans la plaque de raccordement (16) est prévu un premier système de canal de liaison (20) reliant les premières ouvertures de réception (18) à un premier élément de raccordement(21), ainsi qu'un second système de canal de liaison (28) reliant les secondes ouvertures de réception (19) à un second élément de raccordement (29).

10. Dispositif selon la revendication 8, **caractérisé en ce que** dans la plaque de réception (16) est prévu un premier système de canal de liaison reliant les premières ouvertures de réception (18) à un premier élément de raccordement(21), ainsi qu'un second système de canal de liaison reliant les secondes ouvertures de réception (19) à un second élément de raccordement (29).
